(19) Europäisches Patentamt
European Patent Office
Office européen des brevets

(11) **EP 3 110 125 A1**

(12) **EUROPEAN PATENT APPLICATION**

(43) Date of publication:
**28.12.2016 Bulletin 2016/52**

(51) Int Cl.:
**H04N 1/60** (2006.01)

(21) Application number: **15306002.5**

(22) Date of filing: **25.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• THEBAULT, Cédric
  35576 Cesson-Sévigné (FR)
• STAUDER, Jürgen
  35576 Cesson-Sévigné (FR)
• ORHAND, Anita
  35576 Cesson-Sévigné (FR)

(74) Representative: **Huchet, Anne**
**TECHNICOLOR**
**1-5, rue Jeanne d'Arc**
**92130 Issy-les-Moulineaux (FR)**

(54) **COLOR GAMUT MAPPING USING COMPENSATED GAMUT BOUNDARY DESCRIPTION**

(57)     An aspect of present principles is directed to methods and systems for performing gamut mapping of a source color gamut towards a target color gamut. The methods and systems include determining a successive color gamut mapping and successively processing an input color based on the successive color gamut mapping. The successively processing includes mapping the input color based on a first geometric transform to determine a first processed color and mapping the first processed color based on a second geometric transform to determine a second processed color. The first geometric transform is determined based on a first gamut boundary of the source color gamut relative to a second gamut boundary of the target color gamut. The second geometric transform is determined based on a third gamut boundary of an intermediate color gamut relative to the second gamut boundary. The intermediate color gamut is determined based on the source color gamut and first geometric transform.

300

| Determine initial conditions | 301 |
| Determine initial transform $GM_0$ and initial color gamut $G_{GM0}$ | 302 |
| perform loop i = 1, … # of color partial geometric transforms | 303 |
| Determine geometric transform $GM_i$ and color gamut $G_{GMi}$ | 304 |
| End loop | 305 |
| Output transforms and color gamuts | 306 |

*FIG. 3*

EP 3 110 125 A1

**Description**

**Technical Field:**

The present invention relates to color processing of source colors with regard to target colors. The present invention further relates to color gamut mapping using compensated gamut boundary description.

**Background:**

One way of performing image and video processing color processing is known as color gamut mapping.
A "color gamut" is a set of colors. For example, a color gamut may be the set of: colors of real objects under real illumination; colors of image(s) reproduced for display on a monitor or by film projection; synthesized colors in an animated film (e.g., CGI animation); or any other colors visible by a human or by a light capturing apparatus. In practice, color gamuts may be defined by scene illumination, real objects, image capturing devices, image reproduction devices, color spaces, standards such as NTSC, ITU-R BT rec.709 ("rec. 709"), ITU-R BT rec. 2020 ("rec. 2020"), Adobe RGB, DCI-P3, or any other present or future standards for color reproduction or any other constraint(s) on color variety.
"Color gamut mapping" is the process of mapping or redistributing colors of a source color gamut ("source colors") to colors of a target color gamut ("target colors"). The source color gamut may be associated with any color gamut. Likewise, the target color gamut may also be associated with any color gamut from any source. For example, a source color gamut may be associated with input image data and a target color gamut may be associated with a display device (e.g., a user device). Color gamut mapping may include changes to the saturation, hue, lightness, contrast or other color aspects of colors, changes to blacks, whites or other color aspects of the source and/or target color gamut(s).
Color gamut mapping has important applications in the fields of image and video processing (e.g., video content production or post-production). For example, color gamut mapping is an important tool for color processing of video content (e.g., color gamut mapping may be utilized to ensure that a device's display constraints are met). Color gamut mapping may also be used to meet artistic requirements and/or as a tool by a colorist. Color gamut mapping may also be used to convert an original video into different video types for reproduction or transmission, such as for cinema, television, or the Internet. Color gamut mapping can also be used in a camera. For example, in the camera, color gamut mapping may be used to adapt a scene captured by the camera sensor to a given standard, so that the captured colors can be accurately reproduced (e.g., on a display device). The source camera gamut can be defined by the color filters of the camera sensor. Color gamut mapping might also be used in a display device to accurately display an image or video content. The target display gamut may be defined by the primary colors of the display panel. During processing, color gamut mapping may be repeated at various pixel frequencies.
Discussions of color gamut mapping include:

- J. Morovic and M. R. Luo, "The Fundamentals of Gamut Mapping: A Survey", Journal of Imaging Science and Technology, 45/3:283-290, 2001.
- Montag E. D., Fairchild M. D, "Psychophysical Evaluation of Gamut Mapping Techniques Using Simple Rendered Images and Artificial Gamut Boundaries", IEEE Trans. Image Processing, 6:977-989, 1997.
- P. Zolliker, M. Dätwyler, K. Simon, On the Continuity of Gamut Mapping Algorithms, Color Imaging X: Processing, Hardcopy, and Applications. Edited by Eschbach, Reiner; Marcu, Gabriel G. Proceedings of the SPIE, Volume 5667, pp. 220-233, 2004.

Color gamut mapping includes a gamut boundary description (GBD). The GBD defines the boundary surface, or hull of a color gamut in a color space. GBDs often comprise of explicit, generic 3D representations such as triangle meshes or volume models. For example, a GBD of a color gamut can be based on a mesh of triangles, each triangle being defined by its three vertices in the color space of this GBD. These vertices are colors located on the boundary of the color gamut.
Present methods for calculating GBD can be classified into three categories. A first category relate to "color space" methods. "Color space" methods require the input of device-dependent and device-independent color coordinates. The GBD is calculated by using the device dependent coordinates with either minimum or maximum values (see, e.g., R. J. Rolleston, "Visualization of colorimetric calibration", In Proceedings of SPIE, volume 1912, pages 299-309, 1993). A second category relates to convex methods, such as the convex hull method. The convex methods require as input a more or less exhaustive set of colors represented in device independent color space belonging to the color gamut. The assumption is that a convex hull includes all these colors. A third category relates to non-convex methods such as alpha shapes and discrete flow complex. Non-convex methods need the same input data as convex methods but allow a degree of non-convexity. Some convex and non-convex methods are discussed in Cholewo and Love, "Gamut boundary determination using alpha-shapes", Color Imaging Conference in 1999. In praxis, color gamut boundaries are often non-convex because either of the nature of the color device - for example printers with subtractive color reproduction - or because of the non-linearities of the color space - for example CIELAB.

Colors as well as GBD(s) are usually represented in a color space, although not necessarily in the same color space. A color space is a space where colors can be represented by color coordinates. A color space may correspond with a type of display or with an input source (e.g., a camera). The same color gamut can be represented in different color spaces (RGB, Lab, IPT...). However a color gamut represented in different color spaces usually has a different shape in each of those different color spaces. A type of color space is a three-dimensional space that includes, a lightness - L - axis, a chroma - C - axis, and a hue - h-axis. In some color spaces (such as Lab or IPT), hue may be defined as the angular component of the cylindrical representation of the color space.

The cusp of a color gamut is a set of colors, where each color has a larger chroma (i.e. saturation) compared to all other colors being in the same constant-hue leaf of a 3D color space and being within the color gamut. The constant-hue leaf expands along a lightness (L) axis and a chroma (C) axis. When a color gamut is described by a GBD based on discrete surface elements such as triangles, the cusp includes singular points (vertices) or lines (edges) on the boundary surface that limits a color gamut. For a color gamut of a trichromatic, additive display, the cusp usually includes the primary colors red, green, blue and the secondary colors yellow, magenta, cyan. The primary and secondary colors are in at least one of the color channels of the input of the display at either the minimum or at maximum levels. The cusp of a color gamut can be modeled using a gamut boundary description based on mesh of triangles where the cusp is a closed polygon based on vertices of some triangles. Cusp colors corresponding to these vertices are generally defined as the in-gamut color of maximum chroma in a given constant-hue leaf.

The cusp line of a color gamut is a line joining cusp colors. When the color gamut is represented in a color space having a measure for chroma (e.g., Lab color space or JCh color space according to the CIECAM-02 model defined by the CIE in 2002), a cusp color corresponds to the color of maximum Chroma in a plane defined by a constant hue. The chroma of a color corresponds generally to the saturation of a color, however psycho-physical experiments use different viewing conditions to obtain these aspects of colors from human observers, and thus chroma values can differ from saturation values. For example, in the Lab color space (respectively in the IPT color space), chroma is defined to be the square root of the sum of the squares of a and b (respectively P and T). A plane defined by a constant hue is generally named "constant hue leaf". More generally, cusp colors correspond to singular points ("vertices") or singular lines ("edges") on the boundary surface that limits a color gamut. The cusp line of a color gamut can be generally modeled as a line forming a closed polygon on the gamut boundary of this color gamut.

A color gamut mapping method (or gamut mapping algorithm) may map the colors from a source color gamut (having its own source cusp points or source cusp line) to a target color gamut (having also its own target cusp points or cusp line). In order to take advantage of the range of colors in the target gamut, the gamut mapping method may map of a source cusp point/line into its target cusp point/line. Such gamut mapping algorithms are known as cusp gamut mapping algorithms.

A type of color gamut mapping is known cusp clipping color gamut mapping. Cusp color gamut mapping methods may be part of the family of chroma clipping or chroma mapping method (see, e.g., E. D. Montag, M. D. Fairchild, C. F. Carlson, in "Gamut mapping: Evaluation of chroma clipping techniques for three destination gamuts", IS&T/SID Sixth Color Imaging Conference, Scottsdale, 57-61, 1998).

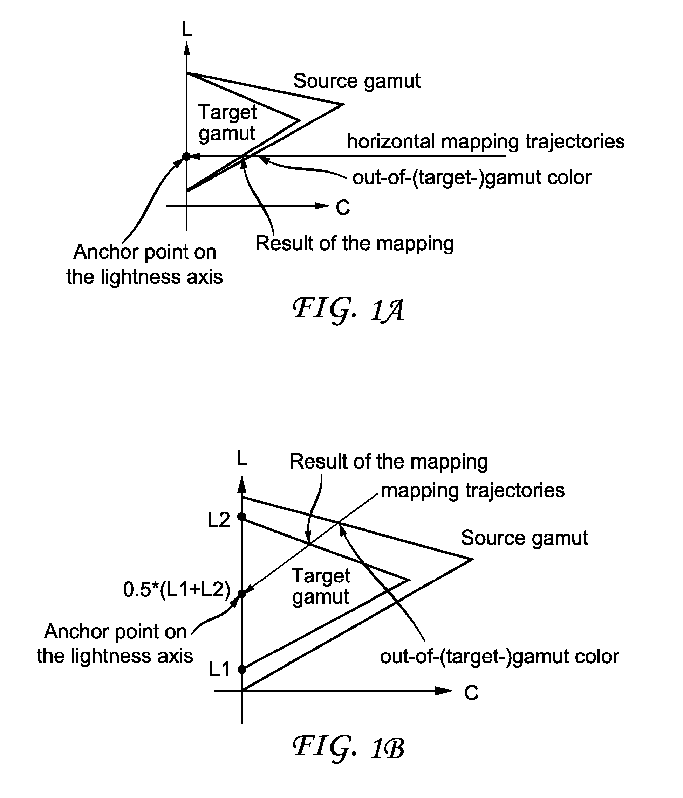

One type of cusp color gamut mapping performs "straight clipping." In "straight clipping," hue and lightness are preserved. Colors that belong to the source gamut but do not belong to the target gamut, ("out-of-gamut colors") are mapped or clipped into the target gamut. The "out of-gamut colors" may be mapped or clipped into the target gamut using straight, horizontal mapping trajectories where the anchor points lie on the lightness axis. Fig. 1A shows an example of a color gamut mapping in a slice of a 3D color gamut based on "straight clipping." "Straight clipping" only reduces the chroma of colors, leading to a reduced saturation in the resulting images.

Fig. 1B shows an example of a color gamut mapping in a slice of a 3D color gamut based on "node clipping." "Node clipping" is directed to mapping trajectories that do not exhibit constant lightness, such as where a single anchor point lies on the lightness axis at L*=50. "Node clipping" can reduce chroma and change lightness of colors, leading to reduced saturation and reduced contrast in the resulting images.

Another color gamut mapping method is known as "cusp clipping". "Cusp clipping" is directed to anchor points that are on the lightness axis but have the same lightness as the gamut cusp in the hue leaf of the color to be mapped. In "cusp clipping" the points are clipped in a line that is not horizontal.

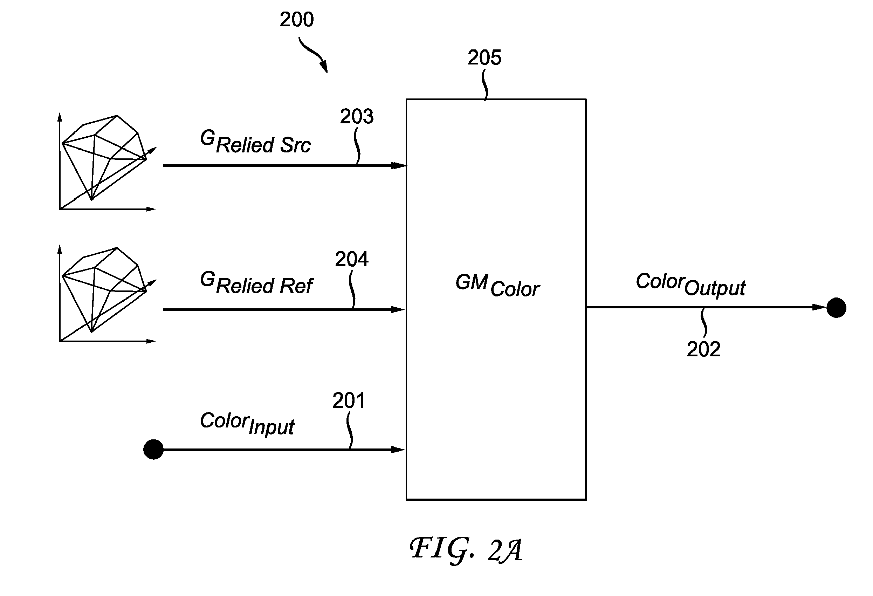

Fig. 2A shows an example of a system 200 for a single color gamut mapping. The method 200 may map a single input color $Color_{Input}$ 201 into a single output color $Color_{Output}$ 202. The input color $Color_{Input}$ 201 may be mapped into the output color $Color_{Output}$ 202 based on a single color gamut mapping method ($GM_{Color}$) 205. The single color gamut mapping method ($GM_{Color}$) 205 utilizes geometric transforms defined by a gamut $G_{ReliedSrc}$ 203 with regard to a gamut $G_{ReliedRef}$ 204. The gamut $G_{ReliedSrc}$ 203 may be a source gamut and the gamut $G_{ReliedRef}$ 204 may be a reference or target color gamut. The geometric transform may take into account the boundaries of the source $G_{ReliedSrc}$ 203 with regard to the reference gamut $G_{ReliedRef}$ 204.

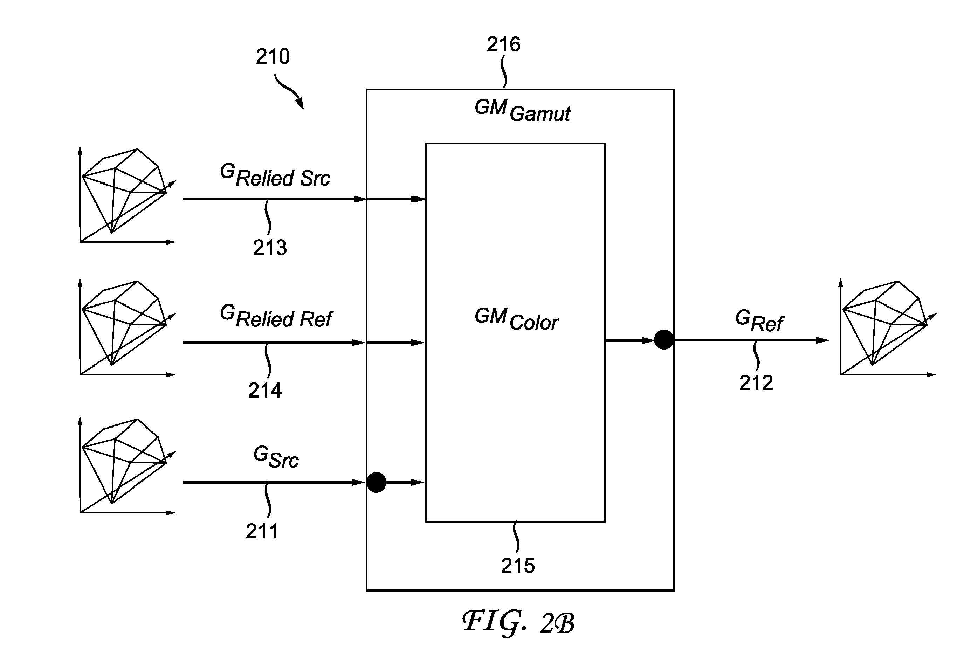

Fig. 2B shows an example of a system 210 for color gamut mapping. The system 210 maps all colors belonging to a source color gamut $G_{Src}$ 211 to output colors of a reference color gamut $G_{Ref}$ 212 (which also may be known as an output or a target color gamut) based on a color gamut method $GM_{Gamut}$ 216. Each color of the source color gamut $G_{Src}$ 211 may be mapped to a color of the reference color gamut $G_{Ref}$ 212 based on a single color gamut mapping method ($GM_{Color}$) 215. The single color gamut mapping method ($GM_{Color}$) 215 may rely on geometric transforms defined by a source gamut $G_{ReliedSrc}$ 213 and a reference, target color gamut $G_{ReliedRef}$ 214. The single color gamut mapping method ($GM_{Color}$) 215 may correspond to the single color gamut mapping method ($GM_{Color}$) 205 illustrated in Fig. 2A. The color gamut method $GM_{Gamut}$ 216 can be viewed as an aggregation of all the output colors determined by applying the single color gamut mapping method $GM_{Color}$ 215 to each color belonging to source gamut $G_{Src}$ 211 to determine a color for the reference color gamut $G_{Ref}$ 212.

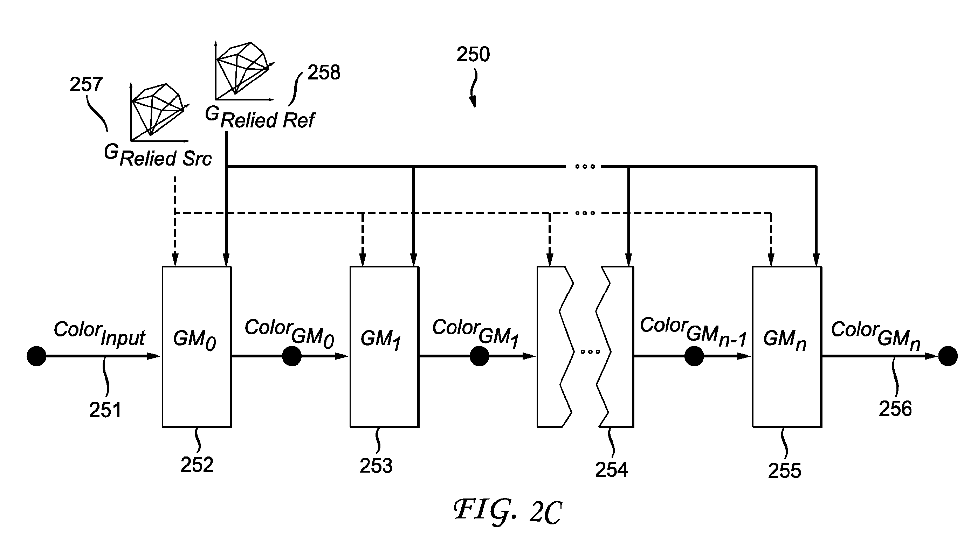

Fig. 2C shows an example of a system 250 for color gamut mapping. The system 250 utilizes cascading gamut mapping where gamut mapping is divided into n steps or gamut mappings 252-255. The system 250 receives a $Color_{Input}$ 251 that is successively mapped to a $Color_{GMn}$ 256 using the gamut mappings 252-255. The system 250 further receives a source gamut $G_{ReliedSrc}$ 257 and a reference, target gamut $G_{ReliedRef}$ 258, which may be expressed in a XYZ color space (such as Lab or IPT). The source gamut $G_{ReliedSrc}$ 257 may be mapped to the reference gamut $G_{ReliedRef}$ 258 based on gamut mappings 252-255. Each specific color input into the gamut mappings 252-255 may be transformed by each of the $n$ partial geometric transforms ($GM_i$). The source gamut $G_{ReliedSrc}$ 257 and the reference gamut $G_{ReliedRef}$ 258 are provided as inputs into the first partial geometric transform ($GM_0$) 252 as well as into the following partial geometric transforms ($GM_1 ... GM_n$) 253-255. The geometric transforms in the gamut mapping chain 252-255 transform input colors 251 to successive output $Color_{GMi}$ where i = 0 to n to determine a final color $Color_{GMn}$ 256.

Gamut mapping may be performed by a geometric transform (GM) that has a complexity which depends on gamut shapes represented in a 3D color space. The geometric transform *(GM)* may be composed of the sequence of $n$ partial geometric transforms ($GM_i$) as shown in Equation No. 1 below:

$$\text{Equation No. 1} \qquad\qquad GM = \prod_{i=1}^{n} GM_i$$

In the above Equation No. 1, operator $\Pi$ may be defined as the concatenation of operations. Each partial geometric transforms ($GM_i$) can operate separately on a specific color aspect. For example, a partial geometric transform may operate on lightness mapping, followed by another partial geometric transform that may operate on chroma mapping.

However, existing cascading gamut mappings have various problems. For example, the input to each partial geometric transforms ($GM_i$) is not sufficient to ensure an optimal color gamut mapping between the source color gamut and the reference color gamut. Moreover, distortions may occur between different color gamut mapping ($GM_{i+1}$). For example, the output of a first partial geometric transform $GM_0$ may create distortion for the initial conditions of a second partial geometric transform $GM_1$. Likewise, the output of a second partial geometric transform $GM_1$ may create distortion for the initial conditions of a third partial geometric transform $GM_2$. This distortion continues to be amplified for later occurring partial geometric transforms.

## Summary of Invention:

An aspect of present principles avoids and provides solutions to the aforementioned problems.

For this purpose, a subject of the invention is

***See set of claims at the end of this document.***

The color gamut mapping using compensated gamut boundary description described herein in accordance with present principles is applicable to any device that includes the feature of color gamut mapping, such as cameras, displays, setup boxes or professional encoders.

## Brief Description of Drawings:

The invention will be more clearly understood on reading the description which follows, given by way of non-limiting example and with reference to the appended figures in which:

- Figure 1A illustrates an exemplary visual representation of a color gamut mapping.
- Figure 1B illustrates an exemplary visual representation of a color gamut mapping.
- Figure 2A illustrates an example of a color gamut mapping.
- Figure 2B illustrates an example of a color gamut mapping.
- Figure 2C illustrates an example of a color gamut mapping.

- Figure 3 illustrates an exemplary method for performing cascading color gamut mapping in accordance with present principles.
- Figure 4 illustrates an exemplary system for performing cascading color gamut mapping in accordance with present principles.
- Figure 5 illustrates an exemplary system in accordance with present principles.
- Figure 6 illustrates a device in accordance with present principles.

**Description of Embodiments:**

An aspect of present principles relates to a compensated gamut boundary for color gamut mapping composed of multiple partial gamut mappings (e.g., a geometric transform ($GM$) that may be composed of the sequence of $n$ partial geometric transforms ($GM_i$) as shown in Equation No. 1).

An aspect of present principles provides for the advantage of providing successive refinement of the real context on each partial gamut relies upon. That is, each partial color gamut in the successive, cascading chain has the benefit of the results of the prior partial color gamuts. That is, each partial color gamut does not have to rely on the initial source color gamut, but rather applies on the color gamuts transformed by the prior partial successive color transforms. The context relates to the conditions in which each geometric transform is determined.

Another advantage of an aspect of present principles relates to a compensation of color divergence.

Another advantage of an aspect of present principles relates to reduction of potential errors or degradations of colors.

Another advantage of present principles is the preservation of artistic intent by allowing for higher color adherence to the specific color defined originally by the artist for the content. For example, the present principles allow for better preservation of fringe colors.

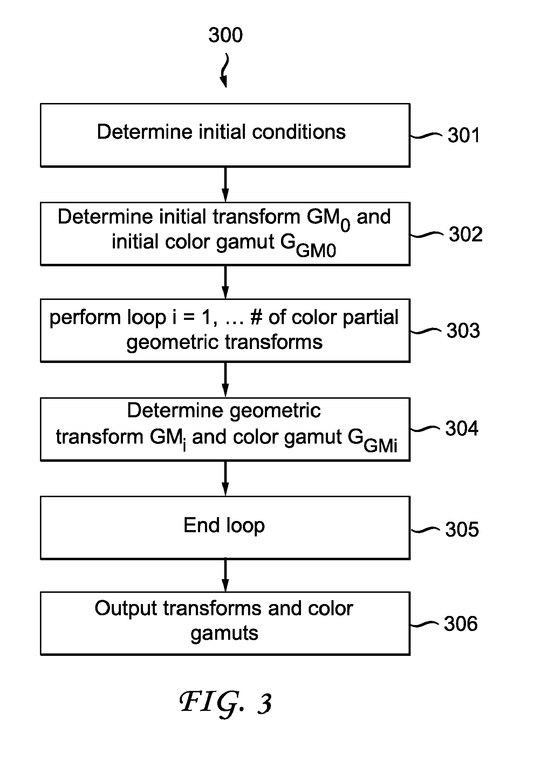

Fig. 3 illustrates a flow diagram illustrating a method 300 in accordance with present principles. Method 300 includes a block 301 that may determine initial conditions for a cascading, successive gamut mapping method in accordance with present principles. The initial conditions may include the type of cascading, successive gamut mapping transforms and the number of cascading, successive gamut mapping transforms. The initial conditions may include the source and target color gamut information. The type of cascading, successive gamut mapping may be determined based on the shapes of the source and target color gamuts. The initial conditions may determine how to divide the cascading, successive mapping into various transforms For example, in one example the division may be based on color perception parameters, e.g., lightness, chroma, hue. Thus, in this example, a transform may be directed to lightness mapping, while the next transform may be directed to chroma mapping. In another example, the initial conditions may determine how to divide the cascading, successive mapping based on first the chroma mapping, and secondly the lightness mapping.

Block 301 may further determine and/or receive information regarding a source color gamut $G_{ReliedSrc}$ and a target, reference color gamut $G_{ReliedRef}$. The source color gamut $G_{ReliedSrc}$ may be mapped to the target color gamut $G_{ReliedRef}$. Block 301 may receive the source color gamut $G_{ReliedSrc}$ and the target color gamut $G_{ReliedRef}$. Alternatively, block 301 may receive information identifying the source color gamut $G_{ReliedSrc}$ and the target color gamut $G_{ReliedRef}$, and may further retrieve additional information regarding one or more of these gamuts based on information prestored in memory. Block 301 may pass control to block 302. Block 302 may determine an initial transform $GM_0$ and initial color gamut $G_{GM0}$. The initial transform $GM_0$ may be a partial geometric transform as described above in Equation No. 1. The initial transform $GM_0$ may be determined based on the source color gamut $G_{ReliedSrc}$ and the target color gamut $G_{ReliedRef}$ received from block 301. The initial transform $GM_0$ may be determined based on the gamut boundary of the source color gamut $G_{ReliedSrc}$ relative to the gamut boundary of the target color gamut $G_{ReliedRef}$ received from block 301. The initial transform $GM_0$ may be a mathematical operator, such as a vector, scalar, matrix.

Block 302 may further determine the initial color gamut $G_{GM0}$ by applying the initial geometric transform $GM_0$ (mathematical operator, e.g., vector, scalar, matrix) to all the colors of the source color gamut $G_{ReliedSrc}$. The initial color gamut $G_{GM0}$ may be determined by mapping each color of the source color gamut $G_{ReliedSrc}$ according to the initial geometric transform $GM_0$. Block 302 may then pass control to block 303.

Block 303 may perform a loop through the total number of cascading, successive partial geometric transforms using a variable i having a range from 1 to the total number of cascading, successive partial geometric transforms. In one example, the total number of cascading, successive partial geometric transforms may be determined by block 301 during the initialization of the parameters. The total number of cascading, successive partial geometric transforms may be identified by a variable $n$. Block 303 may pass control to block 304. Alternatively, the functionality of block 304 may be integrated within the loop performed by block 303.

Block 304 may further determine a geometric transform $GM_i$ and a color gamut $G_{GMi}$. The geometric transform $GM_i$ may be a partial geometric transform as described above in Equation No. 1. The geometric transform $GM_i$ may be determined based on a color gamut $G_{GMi-1}$ and the target color gamut $G_{ReliedRef}$. The color gamut $G_{GMi-1}$ corresponds to either a previously determined color gamut by the loop of block 303 or the initial color gamut $G_{GM0}$. For example, the

geometric transform $GM_1$ may be determined based on the initial color gamut $G_{GM0}$ and the target color gamut $G_{ReliedRef}$. In another example, geometric transform $GM_2$ may be determined based on a color gamut $G_{GM1}$ and the target color gamut $G_{ReliedRef}$. The geometric transform $GM_i$ may be determined based on the gamut boundary of the color gamut $G_{GMi-1}$ relative to the gamut boundary of the target color gamut $G_{ReliedRef}$. The transform $GM_i$ may be output as a mathematical operator, such as a vector, scalar, matrix.

Block 304 may determine the color gamut $G_{GMi}$ by applying the geometric transform GMi (mathematical operator, e.g., vector, scalar, matrix) to all the colors in the color gamut $G_{GMi-1}$. That is, each color in the color gamut $G_{GMi}$ may be mapped according to the geometric transform $GM_i$. Block 304 may then pass control to block 305. Block 305 may end the loop of block 303 and pass control to block 306. Block 306 may output and/or store the initial transform $GM_0$ and the initial color gamut $G_{GM0}$ determined by block 302. Moreover, block 306 may output and/or store the geometric transform $GM_i$ and a color gamut $G_{GMi}$ determined for all values of i by block 304.

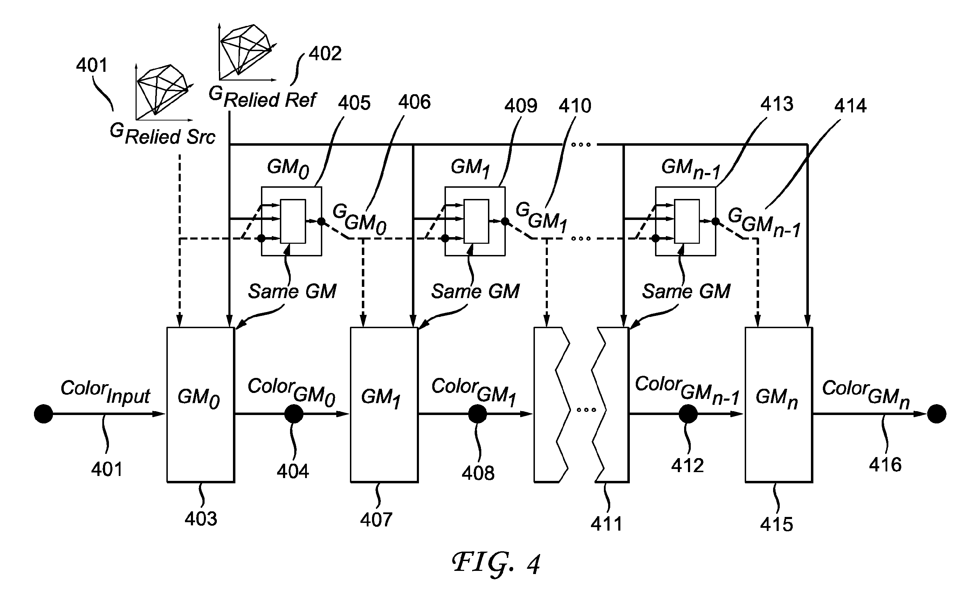

Fig. 4 illustrates a schematic diagram illustrating a system 400 in accordance with present principles. System 400 illustrates the gamut mapping of a $Color_{Input}$ 401 based on a cascading, successive gamut mapping in accordance with present principles. System 400 further illustrates the receipt of information regarding a source color gamut $G_{ReliedSrc}$ 401 and a target, reference color gamut $G_{ReliedRef}$ 402. The source color gamut $G_{ReliedSrc}$ 401 and the target color gamut $G_{ReliedRef}$ 402 may be color gamuts in accordance with the principles described in connection with the source color gamut $G_{ReliedSrc}$ and the target color gamut $G_{ReliedRef}$ in Fig. 3. For example, information regarding the source color gamut $G_{ReliedSrc}$ 401 and the target color gamut $G_{ReliedRef}$ 402 may be received. In one example, the entire information of the source color gamut $G_{ReliedSrc}$ 401 and the target color gamut $G_{ReliedRef}$ 402 may be received. In another, information identifying prestored color gamuts (e.g., standardized color gamuts) may be received for identifying one or more source color gamut $G_{ReliedSrc}$ 401 and target color gamut $G_{ReliedRef}$ 402.

The system 400 may include a block 403. Block 403 may determine an initial transform $GM_0$ based on the gamut boundary of the source color gamut $G_{ReliedSrc}$ 401 and the gamut boundary of the target color gamut $G_{ReliedRef}$ 402. Block 403 may determine the intial transform $GM_0$ in accordance with the principles described in connection with block 302 of Fig. 3.

Block 403 may further determine a $Color_{GM0}$ 404 by mapping the $Color_{Input}$ 401 based on the initial transform $GM_0$. For example, $Color_{GM0}$ 404 may be determined based on the application of the mathematical operator of $GM_0$ to $Color_{Input}$ 401. The $Color_{GM0}$ 404 may be output to a block 407.

The system 400 further includes a block 405. Block 405 may determine an initial color gamut $G_{GM0}$ 406 based on the source color gamut $G_{ReliedSrc}$ 401, the target color gamut $G_{ReliedRef}$ 402, and the initial transform $GM_0$ determined by block 403. In one example, block 405 may determine the initial color gamut $G_{GM0}$ 406 in accordance with the principles described in connection with block 302 of Fig. 3.

The system 400 further includes a block 407. Block 407 may determine a partial geometric transform $GM_1$ based on the gamut boundary of the initial color gamut $G_{GM0}$ 406 and the gamut boundary of the target color gamut $G_{ReliedRef}$ 402. Block 407 may determine the partial geometric transform $GM_1$ in accordance with the principles described in connection with block 304 of Fig. 3.

Block 407 may further determine a $Color_{GM1}$ 408 by mapping the $Color_{GM0}$ 404 based on the partial geometric transform $GM_1$. The $Color_{GM1}$ 408 may be output to a block 411.

The system 400 further includes a block 409. Block 409 may determine a color gamut $G_{GM1}$ 410 based on the initial color gamut $G_{GM0}$ 406, the target color gamut $G_{ReliedRef}$ 402, and the partial geometric transform $GM_1$ determined by block 407. In one example, block 409 may determine the color gamut $G_{GM1}$ 410 in accordance with the principles described in connection with block 304 of Fig. 3.

The system 400 further includes one or more blocks 411. The one or more blocks 411 may each determine a partial geometric transform $GM_i$ where i is the current iteration of the geometric transform being determined. The one or more blocks 411 may determine the partial geometric transform $GM_i$ based on the gamut boundary of a color gamut $G_{GMi-1}$ (for example, when i equals 2, i=e, then the color gamut utilized is $G_{GM1}$) and the gamut boundary of the target color gamut $G_{ReliedRef}$ 402. The one or more blocks 411 may determine the partial geometric transform $GM_i$ in accordance with the principles described in connection with blocks 303 and 304 of Fig. 3.

The one or more blocks 411 may further determine a $Color_{GMi}$ by mapping the $Color_{GMi-1}$ based on the partial geometric transform $GM_i$. The $Color_{GMi}$ may then be output. If more than one block 411 is utilized, the $Color_{GMi}$ is determined by successively mapping the $Color_{GMi-1}$ based on the successively determined partial geometric transform $GM_i$, where i is incremented with each iteration. For example, the one or more blocks 411 may determine (through iteration), a $Color_{GMn-1}$, where n is equal to the total number of partial geometric transforms minus one (the one correlating to the intial geometric transform determined at block 403).

The system 400 further includes one or more blocks 413. The one or more blocks 413 may determine the color gamut $G_{GMi}$ based on the color gamut $G_{GMi-1}$ determined by the previous iteration, the target color gamut $G_{ReliedRef}$ 402, and the partial geometric transform $GM_{i-1}$ also determined by the previous iteration. For example, the one or more blocks 413 may determine (through iteration), a color gamut $G_{GMn-1}$ where n is equal to the total number of partial geometric transforms minus one. In one example, the one or more blocks 413 may determine the color gamut $G_{GMi}$ in accordance with the principles described in connection with blocks 303 and 304 of Fig. 3.

The system 400 may further include a blocks 415. The block 415 may determine a partial geometric transform $GM_n$ based on the gamut boundary of a color gamut $G_{GMn-1}$ 414 and the gamut boundary of the target color gamut $G_{ReliedRef}$ 402. The block 415 may determine the partial geometric transform $GM_n$ based in accordance with the principles described in connection with blocks 303 and 304 of Fig. 3.

The block 415 may further determine a $Color_{GMn}$ by mapping the $Color_{GMn-1}$ based on the partial geometric transform $GM_n$. The $Color_{GMn}$ may then be output by system 400 as the final processed color in accordance with present principles. The method 400 may then be repeated for other $Color_{Input}$ values to determine the corresponding output $Color_{GMn}$.

An aspect of present principle is directed to gamut mapping that takes into account cascading, successive partial geometric transforms (or partial color gamut mappings). That is, the partial geometric transforms may provide for gamuts $(GM_p)$, $(G_{GMp-1})$ resulting from all background processes

$$\text{Equation No. 2} \qquad \prod_{i=0}^{p-1} GM_i$$

$$\text{Equation No. 3} \qquad GM = \prod_{i=0}^{n} GM_i = \prod_{i=0}^{p-1} GM_i \times GM_p \times \prod_{i=p+1}^{n} GM_i$$

$GM_p$ represents the current partial gamut mapping performed at step p. $G_{GMp-1}$ represents the source color gamut transformed by the p successive gamut mappings along the cascade up to the previous partial gamut mapping at step p.

Equation No. 2 represents the cascading, successive of gamut mappings up to (p-1)-step. Equation No. 3 represent the global gamut mapping.

Each partial color gamut mapping $(GM_i)$ may provide for a more effective resulting target gamut. This can be achieved by having each partial color gamut mapping $(GM_i)$ take into account what has already been achieved by the previous color gamut mapping $(GM_{i-1})$. Therefore, a description of the prior, intermediate gamut $(G_{GMi-1})$ is necessary. The prior, intermediate gamut $(G_{GMi-1})$ is the gamut resulting from the previous partial color gamut mapping $(GM_{i-1})$.

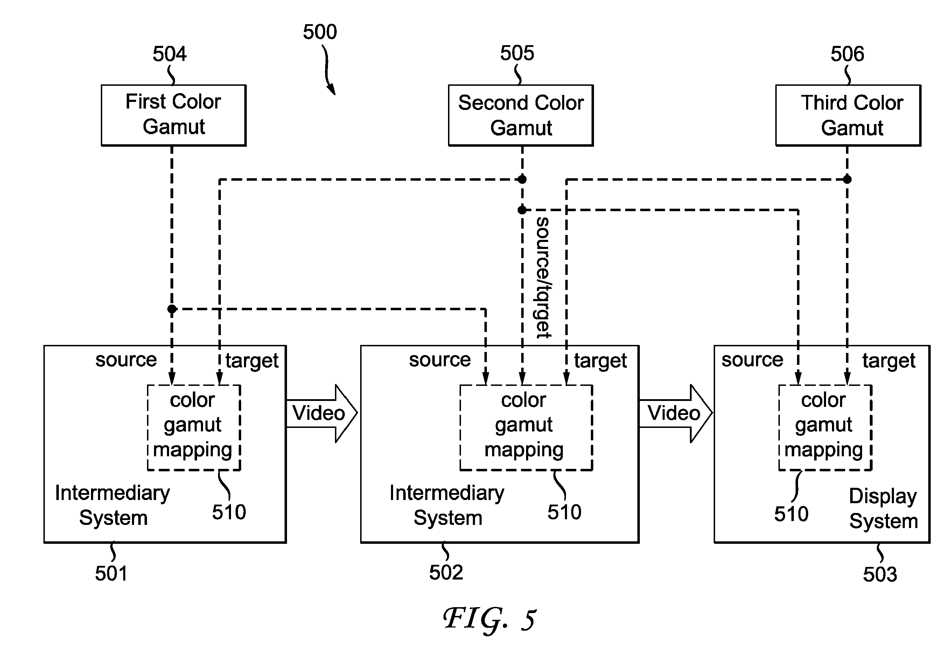

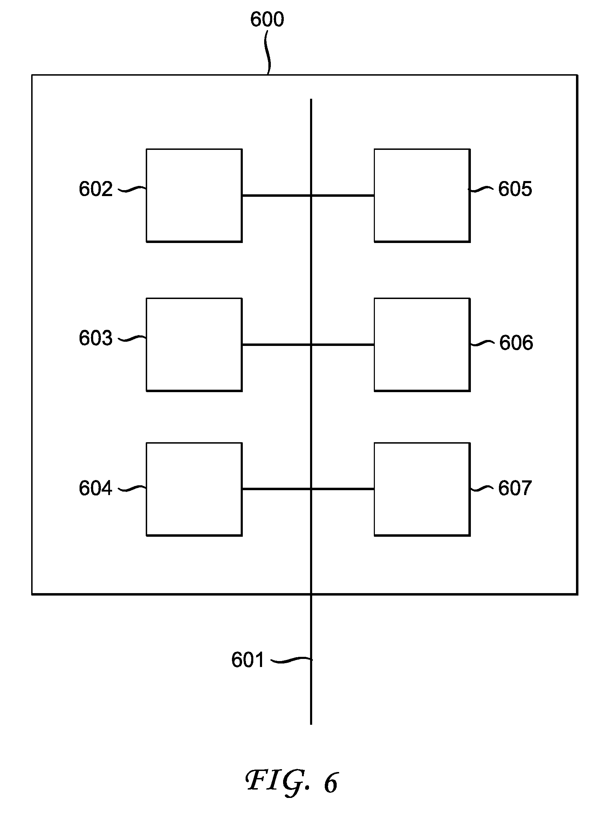

Fig. 5 illustrates an exemplary system 500 in accordance with present principles. The system 500 may include one or more intermediary system 501, intermediary system 502 and display system 503. As it can be appreciated, system 500 may include only one of these systems 501-503. Alternatively, the system 500 may include some or all of the systems 501-503. Alternatively, system 500 may include additional or different systems for performing color gamut mapping other than the systems 501-503. In one example, each of the systems 501-503 may be a device similar to device 600 of Fig. 6. Alternatively, each of the systems 501-503 may include only part of the components of device 600 of Fig. 6.

The system 500 illustrates a first color gamut 504, a second color gamut 505, and a third color gamut 506. It can be appreciated however, that one or more of these color gamuts 504-506 may be optional. Or one or more of the color gamuts 504-506 may be included, or different color gamuts than the examples provided herein may be further included.

Each of the color gamuts 504-506 may be received or may be known (e.g., stored based on a predetermined value of the color gamut). Each of the color gamuts 504-506 may correspond to color gamuts, such as the color gamuts of a display panel, of a camera, of present or future color gamut standards (e.g., NTSC, rec. 709, rec. 2020, Adobe RGB, DCI-P3).

The color gamuts 504-506 may be received from any device/system (e.g., from a device delivering the input content, such as a camera, a set top box, a Blu-ray player, a camera sensor, a HDMI receiver, a communication interface). The color gamuts may alternatively or in addition be compliant with a standard (e.g. rec.709, rec.2020)). The color gamuts may be received via any medium (e.g., a mobile network (including 3G or 4G network), a wireless network (including Wi-Fi, Bluetooth network or links), a TV Broadcast network (e.g. DVB or ATSC receiver interface), a wired network (including web network), a wired link or bus (including HMDI, USB), an optical disk player (including DVD or Blu-Ray player, a video stream or a storage medium (e.g. a Blu-Ray Disk, a memory).

Each of the color gamuts 504-506 may be received or may be signaled. Additionally, as used herein, the word "signal" refers to indicating something, e.g., information of a stored color gamut or color gamut mapping information. For example, a system may receive a signal identifying a known color gamut (e.g., a standardized color gamut). A system may signal one or more parameters relating to a color gamut in order to make a system aware of which color gamut is utilized on the color gamut mapping system side. In this way, parameters or identifiers may be utilized to identify color gamuts. By avoiding transmission of any actual parameters, savings may be realized. It is to be appreciated that signaling may be accomplished in a variety of ways. For example, one or more syntax elements, flags, and so forth may be used to signal information.

Each of the systems 501-503 may include a color gamut mapping block 510. The color gamut mapping block 510 may perform color gamut mapping in accordance with the principles described in connection with Figs. 3-4 and Equation Nos. 1-3. The color gamut mapping 510 may be performed locally or may be performed in whole or in part remotely (e.g., on a server, in the cloud).

In one example, the intermediary system 501 may be a camera. The intermediary system 501 may perform color gamut mapping 510 in accordance with present principles to map a camera sensor color gamut to another color gamut (e.g., a standardized color gamut, or the color gamut of the camera display). In one example, the intermediary system 501 may be a broadcaster encoder. The intermediary system 501 may perform color gamut mapping 510 in accordance with present principles to map a color gamut of the original video content (e.g., a standardized color gamut like rec. 2020) to a color gamut of the transmission channel (e.g., a standardized color gamut like rec. 709). In one example, the intermediary system 502 may be a set-top box system, a video recorder, or a Blu-ray player for performing color gamut mapping between two different standards (e.g., NTSC, rec. 709, rec. 2020, Adobe RGB, and DCI-P3). As shown in Fig. 5, the source color gamut, the target color gamut or both the source and target color gamut may be provided to intermediary system 502. In one example, there may be multiple intermediary systems 502 that may perform color gamut mapping during the transmission/reception of color gamut information. In one example, display system 503 may be a display. The display system 503 may perform color gamut mapping 510 in accordance for present principles to map the color gamut of the video content (e.g. utilizing rec. 2020) to the color gamut of the physical display panel (e.g. defined by its primary and the secondary colors).

Alternatively, each of the systems 501-503 may apply an LUT that was determined in accordance with the principles described in connection with Figs. 3-4 and Equations Nos. 1-3.

Fig. 6 represents an exemplary architecture of a device 600 which may be configured to implement methods described in relation with Fig. 6. The present principles may be performed locally or may be performed in whole or in part remotely (e.g., on a server, in the cloud). As described above, device 600 may be part of one or more systems 501-503 of Fig. 5.

In one example, Fig. 6 represents an apparatus that may be configured to implement the color processing methods according to present principles.

The device 600 may comprise the following elements that are linked together by a data and address bus 601:

- a microprocessor 602 (or CPU), which is, for example, a DSP (or Digital Signal Processor);
- a ROM (or Read Only Memory) 603;
- a RAM (or Random Access Memory) 604;
- an I/O interface 605 for reception of data to transmit, from an application; and
- a battery 606 (or other suitable power source).

According to an example, the battery 606 is external to the device. In each of mentioned memory, the word « register » used in the specification can correspond to area of small capacity (some bits) or to very large area (e.g. a whole program or large amount of received or decoded data). ROM 703 comprises at least a program and parameters. Algorithm of the methods according to the invention is stored in the ROM 603. When switched on, the CPU 602 uploads the program in the RAM and executes the corresponding instructions.

RAM 604 comprises, in a register, the program executed by the CPU 602 and uploaded after switch on of the device 600, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users. The system 600 may include memory 603 and/or 604 and processor(s) 602. In one example, the processor 602 may perform the operations described in connection with Figs. 3-4. In one example, the memory 603 and/or 604 may store data related to the operations described in connection with Figs. 3-4.

While the present invention is described with respect to a particular embodiment, it is understood that the present invention is not limited to this embodiment. The present invention as claimed therefore includes variations from this embodiment described herein, as will be apparent to one of skill in the art.

It is to be further understood that, because some of the constituent system components and methods depicted in the accompanying drawings are preferably implemented in software, the actual connections between the system components or the process function blocks may differ depending upon the manner in which the invention is implemented.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage. Other hardware, conventional and/or custom, may also be included.

Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

**Claims**

1.  A method for performing gamut mapping of a source color gamut towards a target color gamut, comprising:

    determining a successive color gamut mapping;
    successively processing an input color based on the successive color gamut mapping;
    wherein the successively processing includes mapping the input color based on a first geometric transform to determine a first processed color and mapping the first processed color based on a second geometric transform to determine a second processed color;
    wherein the first geometric transform is determined based on a first gamut boundary of the source color gamut relative to a second gamut boundary of the target color gamut;
    wherein the second geometric transform is determined based on a third gamut boundary of an intermediate color gamut relative to the second gamut boundary;
    wherein the intermediate color gamut is determined based on the source color gamut and first geometric transform.

2.  A system for performing gamut mapping of a source color gamut to a target color gamut, comprising:

    a processor configured to determine a successive color gamut mapping and to successively process an input color based on the successive color gamut mapping;
    wherein the successively processing includes mapping the input color based on a first geometric transform to determine a first processed color and mapping the first processed color based on a second geometric transform to determine a second processed color;
    wherein the first geometric transform is determined based on a first gamut boundary of the source color gamut relative to a second gamut boundary of the target color gamut;
    wherein the second geometric transform is determined based on a third gamut boundary of an intermediate color gamut relative to the second gamut boundary;
    wherein the intermediate color gamut is determined based on the source color gamut and first geometric transform.

3.  A non-transitory computer readable storage medium comprising a computer program including a set of instructions executable by a processor, the instructions configured to perform:

    determine a successive color gamut mapping; and
    successively process an input color based on the successive color gamut mapping;
    wherein the successively processing includes mapping the input color based on a first geometric transform to determine a first processed color and mapping the first processed color based on a second geometric transform to determine a second processed color;

wherein the first geometric transform is determined based on a first gamut boundary of the source color gamut relative to a second gamut boundary of the target color gamut;

wherein the second geometric transform is determined based on a third gamut boundary of an intermediate color gamut relative to the second gamut boundary;

wherein the intermediate color gamut is determined based on the source color gamut and first geometric transform.

4. The method of claim 1, system of claim 2 or non-transitory computer readable medium of claim 3, further comprising determining a Look Up Table, wherein the successive color gamut mapping is performed based on the Look Up Table.

5. The method of claim 1, system of claim 2 or non-transitory computer readable medium of claim 3, wherein the second processed color is a target color of the target color gamut.

6. The method of claim 1, system of claim 2 or non-transitory computer readable medium of claim 3,
wherein the successively processing includes mapping the second processed color based on a third geometric transform to determine a third processed color, wherein the third geometric transform is determined based on a fourth gamut boundary of a second intermediate color gamut and the second gamut boundary of the target color gamut,
wherein the second intermediate color gamut is determined based on the intermediate color gamut, the target color gamut, and the second geometric transform.

7. The method of claim 1, system of claim 2 or non-transitory computer readable medium of claim 3, wherein the intermediate color gamut is determined by applying the first geometric transform to all the colors of the source color gamut.

8. The method of claim 1, system of claim 2 or non-transitory computer readable medium of claim 3, wherein the cascading color gamut mapping is defined by

$$GM = \prod_{i=1}^{n} GM_i$$

wherein the GM is the cascading color gamut mapping, $GM_i$ is a partial geometric transform including the initial geometric transform and the second geometric transform and n is a total number of geometric transforms utilized during the cascading color gamut mapping.

9. The method of claim 1, system of claim 2 or non-transitory computer readable medium of claim 3, wherein the target color gamut is at least one selected from the group of a display panel color gamut and a standardized color gamut.

10. The method of claim 1, system of claim 2 or non-transitory computer readable medium of claim 3, wherein the source color gamut is directed to at least one selected from a group of a camera color gamut and a standardized color gamut.

L

Source gamut

Target gamut

horizontal mapping trajectories

out-of-(target-)gamut color

C

Anchor point on the lightness axis

Result of the mapping

*FIG. 1A*

L

Result of the mapping

mapping trajectories

L2

Source gamut

0.5*(L1+L2)

Target gamut

Anchor point on the lightness axis

L1

out-of-(target-)gamut color

C

*FIG. 1B*

200

205

$G_{Relied\ Src}$   203

$G_{Relied\ Ref}$   204

$GM_{Color}$

$Color_{Output}$

202

$Color_{Input}$   201

*FIG. 2A*

*FIG. 2B*

*FIG. 2C*

300

Determine initial conditions — 301

Determine initial transform $GM_0$ and initial color gamut $G_{GM0}$ — 302

perform loop i = 1, ... # of color partial geometric transforms — 303

Determine geometric transform $GM_i$ and color gamut $G_{GMi}$ — 304

End loop — 305

Output transforms and color gamuts — 306

*FIG. 3*

FIG. 4

FIG. 5

*FIG. 6*

Europäisches
Patentamt

European
Patent Office

Office européen
des brevets

**EUROPEAN SEARCH REPORT**

Application Number

EP 15 30 6002

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/117457 A1 (QIAO YUE [US]) 26 June 2003 (2003-06-26) * paragraph [0039] - paragraph [0042]; figures 4-6 * ----- | 1-10 | INV. H04N1/60 |
| X | US 7 116 441 B1 (MATSUOKA HIROCHIKA [JP]) 3 October 2006 (2006-10-03) * abstract * * column 25, line 63 - column 26, line 38; figure 36 * ----- | 1-10 | |
| A | US 2009/185200 A1 (TIN SIU-KEI [US]) 23 July 2009 (2009-07-23) * abstract * * paragraph [0011] * ----- | 1-10 | |

TECHNICAL FIELDS
SEARCHED    (IPC)

H04N

The present search report has been drawn up for all claims

| Place of search | Date of completion of the search | Examiner |
|---|---|---|
| Munich | 10 December 2015 | Bakstein, Hynek |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

**EP 3 110 125 A1**

## ANNEX TO THE EUROPEAN SEARCH REPORT
## ON EUROPEAN PATENT APPLICATION NO.

EP 15 30 6002

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2015

| Patent document cited in search report | | Publication date | Patent family member(s) | | Publication date |
|---|---|---|---|---|---|
| US 2003117457 | A1 | 26-06-2003 | NONE | | |
| US 7116441 | B1 | 03-10-2006 | NONE | | |
| US 2009185200 | A1 | 23-07-2009 | US 2009185200 A1<br>WO 2009094154 A1 | | 23-07-2009<br>30-07-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. MOROVIC ; M. R. LUO.** The Fundamentals of Gamut Mapping: A Survey. *Journal of Imaging Science and Technology,* 2001, vol. 45 (3), 283-290
- **MONTAG E. D. ; FAIRCHILD M. D.** Psychophysical Evaluation of Gamut Mapping Techniques Using Simple Rendered Images and Artificial Gamut Boundaries. *IEEE Trans. Image Processing,* 1997, vol. 6, 977-989
- On the Continuity of Gamut Mapping Algorithms, Color Imaging X: Processing, Hardcopy. **P. ZOLLIKER ; M. DÄTWYLER ; K. SIMON.** Proceedings of the SPIE. 2004, vol. 5667, 220-233
- **R. J. ROLLESTON.** Visualization of colorimetric calibration. *Proceedings of SPIE,* 1993, vol. 1912, 299-309
- **CHOLEWO ; LOVE.** Gamut boundary determination using alpha-shapes. *Color Imaging Conference,* 1999
- **E. D. MONTAG ; M. D. FAIRCHILD ; C. F. CARLSON.** Gamut mapping: Evaluation of chroma clipping techniques for three destination gamuts. *IS&T/SID Sixth Color Imaging Conference, Scottsdale,* 1998, 57-61